# EUROPEAN PATENT APPLICATION

(11) **EP 1 536 173 A1**
(43) Date of publication of application: **01.06.2005**
(21) Application number: 03794256.2
(22) Date of filing: 05.09.2003
(51) Int. Cl.: F16L 11/12, B63B 35/32, B05D 7/24

(54) **SURFACE FLOATING BODY WITH LIGHT REFLECTIVE MATERIAL AND METHOD OF MANUFACTURING THE BODY**

(30) Priority: 05.09.2002 JP 2002260197
(71) Applicant: Bridgestone Corporation, Tokyo 104-8340 (JP)
(72) Inventor: FUJIWARA, Toshihiro, c/o BRIDGESTONE CORPORATION, Tokyo 104-8430 (JP); TATSUNAMI, Keizou, c/o BRIDGESTONE CORPORATION, Tokyo 104-8430 (JP); YAGYUU, Tomoaki, c/o BRIDGESTONE CORPORATION, Tokyo 104-8430 (JP)
(74) Representative: Whalley, Kevin
(86) International application number: PCT/JP2003/011363
(87) International publication number: WO 2004/023019

(57) **Abstract**

A water surface floating body with light reflective material excelling in durability, being free from the trouble of maintenance, and being able to maintain its reflective capability over long periods of time is provided. This water surface floating body is a water surface floating body such as an oil transport hose, oil fence, anti- pollution dispersing film and the like floated on the surface of water even at night. A light reflective material comprising glass beads having a metal vapor-deposited film provided thereon is attached to the outer surface of the floating body.

## Description

### Technical Field

The present invention relates to a water surface floating body such as an oil transport hose, oil fence, and pollution anti-dispersing film that is floated on a water surface such as the sea surface even at night. More particularly, it is related to a water surface floating body with light reflective material that is easily visible at night.

### Background of the Art

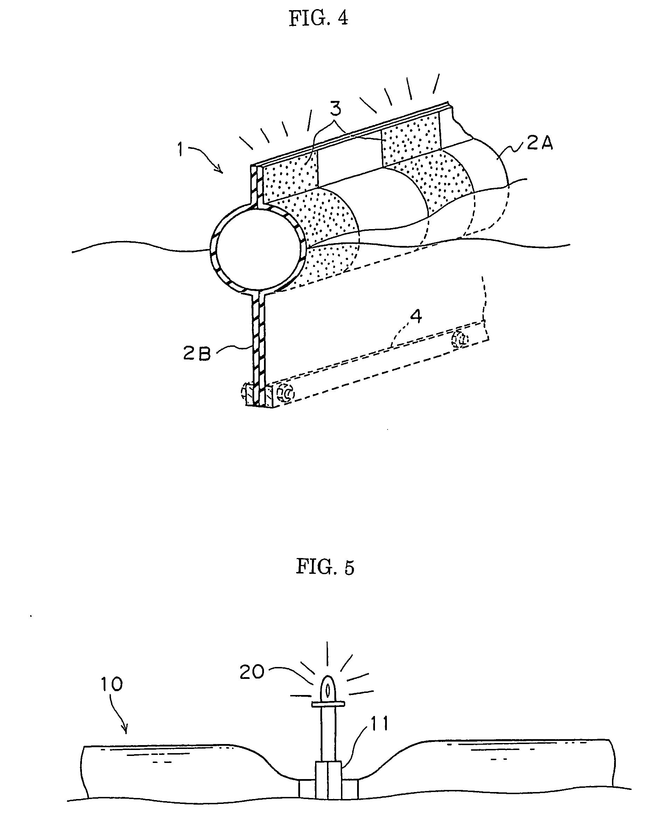

Oil transport hoses, oil fences, pollution anti-dispersing films and the like are mainly made from elastic bodies such as rubber, and are set on the sea surface offshore and used day and night. Products that are thus floated on the sea surface, as shown in Fig. 5, are fitted with an existing illuminating device 20 such as a warning beacon, at the important points of the oil transport hose floating on the sea surface, for the navigation safety of vessels during use at night.

Specifically, an illuminating device 20 comprising a simple battery-powered light is fitted to a flange portion 11 on the oil transport hose 10 and is made to show its existence on the sea to vessels sailing nearby.

Further, a technology is also known where an elastic polymer material having a light-storing material mixed therein covers the exterior surface of the hose or the like, and at night, emits the light stored in the light-storing material so as to make its existence known (e.g., refer to Japanese Patent Application Laid-Open No. 8-323926).

Furthermore, a technology is also known where a skin component having glass beads mixed therein is provided on the exterior surface of a hose or the like, such that the hose or the like makes its existence known by reflecting the lights of vessels sailing at night. (e.g., refer to Japanese Utility Model Application Laid-Open No. 63-86487).

However, these types of illuminating devices 20 have been problematic in that they are easily damaged when the oil transport hose 10 is shaken by wind, rain, and waves during rough weather and when floating objects and the like collide therewith. Further, these have been troublesome in that, since batteries acting as the power source have limited life, battery replacement must be periodically undertaken. For these reasons, these generally tend to be damaged every few months and have been disadvantageous from a maintenance perspective as well.

Meanwhile, in cases where, instead of installing an illuminating device, existing reflective paint is applied or existing reflective tape is stuck to the surface of an oil transport hose and the like, there was a shortcoming in that the reflective capability gradually deteriorates due to the poor weather resistance thereof. Further, although the technology disclosed in Patent Publication 1 exhibits effective action results, a solution through a different technical means is desired. Moreover, with the technology disclosed in Patent Publication 2, the light reflectivity of the glass beads is insufficient so that there arises a problem in that it is difficult to distinguish reflections off the glass beads from reflections off the water surface.

### Disclosure of Invention

Therefore, the present invention has been made with the purpose of providing a water surface floating body with light-reflective material excelling in durability, being free from the trouble of maintenance, being able to maintain its reflective capability for long periods of time, and excelling in visibility.

The present invention has been made to solve the above-described issues, and in a first aspect, the present invention provides a water surface floating body that is floated on the surface of water even at night, comprising a light-reflective material including glass beads, the light-reflective material being provided at an outer surface of the water surface floating body, wherein the glass beads have a metal vapor-deposited film provided thereon.

It is preferable that at least the hemisphere portions of the glass beads of the light reflective material are buried in the outer surface made from an elastic body, of the water surface floating body. Further, it is preferable that the outer surface of the floating body has light transparency and furthermore, it is preferable that the surface of the light reflective material be covered with a resin material having light transparency.

In a second aspect of the present invention, it provides a manufacturing method for a water surface floating body that is floated on the surface of water even at night. The method comprises the steps of: coating the water surface floating body with a liquefied resin, while rotating the floating body around its central axis, to form an outer surface of the water surface floating body; dropping glass beads which are to function as a light-reflective material on the outer surface, in a state where the fluidity of the liquefied resin is maintained; and hardening the liquefied resin and fixing the light reflective material to the outer surface.

It is preferable that the manufacturing method for a water surface floating body with the light reflective material, further comprising the steps of: repeating by multiple times the application of the liquefied resin for forming the outer surface, followed by dropping of the glass beads as the light reflective material; thereby making the outer surface having the light reflective material provided thereon a multi-layered structure. The method may further comprise burying the light reflective material into the outer surface by spraying the glass onto the outer surface.

Preferable examples of the floating body include an oil transport hose, oil fence, or pollution anti-dispersing film. The reflective material made from the glass beads can be attached to the entire outer surface of the floating body or attached in portions.

### Brief Description of the Drawings

Fig. 1A is a partial cross-sectional view showing a first embodiment of the water surface floating body with light reflective material of the present invention.
Fig. 1B is a side view showing the first embodiment of the water surface floating body with light reflective material of the present invention.
Fig. 2A is a partial cross-sectional view showing a second embodiment of the water surface floating body with light reflective material of the present invention.
Fig. 2B is a side view showing the second embodiment of the water surface floating body with light reflective material of the present invention.
Fig. 3A is a partial cross-sectional view showing a third embodiment of the water surface floating body with light reflective material of the present invention.
Fig. 3B is a side view showing the third embodiment of the water surface floating body with light reflective material of the present invention.
Fig. 4 is a perspective view showing a fourth embodiment of the water surface floating body with light reflective material of the present invention.
Fig. 5 is a side view showing a conventional example of an illumination device fixed to an oil transport hose.

### Best Modes for Implementing the Invention

The water surface floating body with light reflective material of the present invention is applied to objects that are floated on a water surface even at night. Examples of suitable applications include devices that are set and used on the sea day and night such as oil transport hoses including marine hoses and the like; transportable oil fences for preventing the dispersion of flowing oil in oceans and rivers; floatable-immersible oil fences for preventing crude oil from flowing out of sea berth and the like; transportable or floatable-immersible anti pollution-dispersing films for preventing the dispersion of pollution generated in the dredging of oceans and rivers, or land-reclamation construction and the like.

Here, the light reflective material comprises glass beads that are attached to the exterior surface of a floating body. That is, unlike illuminating devices such as the warning beacons that are conventionally used, this does not project from the water surface floating body so there is no risk of collision and contact with vessels and floating objects and the like that would damage the illuminating device. It reflects received light without radiating on its own so maintenance such as periodic battery exchange is unnecessary. On top of that, it is economical because it is not necessary to prepare alternative devices for damaged illuminating devices and spent batteries.

Further, since there is no applying of reflective paint or sticking of reflective tape, there is no deterioration of its reflective capability due to the poor weather resistance thereof. Especially in a case where the light reflective material comprising glass beads is buried in the outer surface of an elastic body where, because it is strongly fixed and unified with the outer surface of the water surface floating body, problems such as damage and peeling and the like due to collision or contact friction during use, and the poor durability that is a concern in the application of paint or sticking of tape can be solved.

Furthermore, a metal vapor-deposited film is applied to the glass beads. This metal vapor-deposited film is preferably an aluminum vapor-deposited film and it is preferable that this be applied to at least up to the hemisphere surfaces or more of the glass beads. Specifically, the light that passes through the sphere surface not having the metal vapor-deposited film is effectively reflected by the metal vapor-deposited film, whereby the visibility is improved. However, even in a case where the metal vapor-deposited film is applied to the entire sphere surface of the glass bead, by appropriately selecting the type of vapor-deposited film and film thickness and the like, light passes through. Further, many of the metal vapor-deposited films, when partially exposed from the outer surface, are stripped during use when floating on the water surface, so covering the entire sphere surface at the time of manufacture is not a problem.

Next, regarding the glass beads that form the light reflective material, the diameters of the glass beads are to be 30 to 200µm, and preferably 60 to 100µm. When these are smaller than 30µm and buried in the outer surface of the floating body, the glass beads are almost entirely buried and are not exposed at the outer surface so the light reflective capability worsens. Further, even in cases where these are attached to the outer surface with an adhesive, they are deeply hidden by the adhesive.

On the other hand, if the diameter of the glass beads are larger than 200µm, the portions that are fixed to the outer surface of the floating body relative to the sizes of the glass beads become relatively small and the risk arises of these beads dropping off from the outer surface of the floating body that floats and shakes on the water surface. In order to prevent these from dropping off, it is effective to bury at least the hemisphere portions of the glass beads in the outer surface made from an elastic body and to cover the surfaces of the glass beads with a resin material (a film or the like) having transparency.

This reflective material made from glass beads can be attached to the entire outer surface of a floating body such as an oil transport hose, oil fence, or anti-pollution dispersing film. However, the glass beads can also be attached to portions of the exterior surface of the floating body in a stripe or spiral form. If the outer surface to which the glass beads are attached is made to have light-transparency, the light that passes through the outer surface reaches the glass beads so that the visibility of the beads improves even more.

Incidentally, this type of water surface floating body with reflective material can be manufactured by: applying a liquefied resin that forms the outer surface to the body while rotating the floating body around its central axis; dropping thereon, in a state where the fluidity of the liquefied resin is maintained, glass beads that function as the light reflective material; and hardening the liquefied resin. For this liquefied resin, two-fluid soft urethane resin is suitable, and the thickness of the outer surface is made to be 1 to 10mm. Then the temperature is set to 10 to 80°C, preferably 15 to 65°C, and the glass beads are naturally dropped with a sieve from a height of 10 to 100cm.

Here, when the temperature of the urethane resin is less than 10°C or the dropping height of the glass beads is less than 10cm, the glass beads are not buried deeply into the urethane resin and are simply stuck to the surface, whereby the risk of dropping off arises. On the contrary, if the temperature of the urethane resin exceeds 80°C, the dispersion of the glass beads does not become equal. If the dropping height of the glass beads exceeds 100cm, they receive the effects of wind and the like during manufacture and thus scatter. Note that, if the glass beads are sprayed, the glass beads can be reliably buried in the outer surface regardless of low height and wind and the like.

To provide further detailed descriptions regarding the burying of the glass beads, the weight of glass beads having diameters of 30 to 200µm with aluminum vapor-deposited film applied to the hemisphere surfaces is almost 0.003 to 0.046g/bead. When setting the gross density of the slits of the machine that drops the glass beads therethrough to a range of 0.8mm to 3.0mm, the supply rate of the glass beads becomes 5 to 30g/m²/sec.

With such conditions as described above, the temperature of the two-fluid soft urethane resin is set to 10 to 80°C so that the resin is in a state of a starch syrup where it neither flows nor is solid. Then, the glass beads are dropped naturally from a height of 10 to 100cm. In this method, the viscosity of the two-fluid soft urethane resin, the diameters, the weight, the supply rate, the falling velocity and the like of the glass beads become optimum whereby the evenness in distribution, the depth of burial and the like of the glass beads become suitable.

Further, by repeating by multiple times the application of the liquefied resin for forming the outer surface, followed by dropping of the glass beads as the light reflective material, thereby making the outer surface having the light reflective material provided thereon a multi-layered structure, even if one water surface floating body contacts other water surface floating bodies during use and the top layer of the outer surface is worn due to friction, the light reflective material which is provided in the second and lower layers continues to function and thus the product life is long.

### Embodiments

Specific examples of preferable embodiments of the present invention will be explained hereinafter based on the drawings.

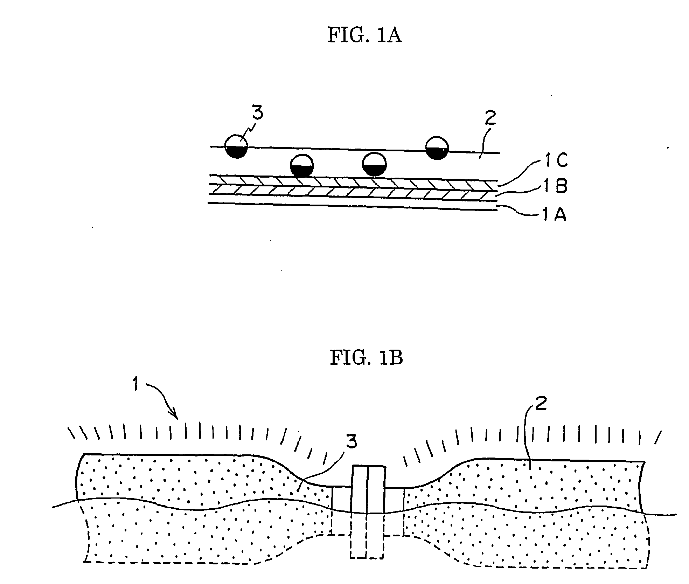

Fig. 1A is a partial cross-sectional view showing a first embodiment of the water surface floating body with light reflective material of the present invention, and Fig. 1B is a side view showing the first embodiment of the water surface floating body with light reflective material of the present invention. A floating body 1 of the first embodiment, shown in Fig. 1A and

Fig. 1B, is floated on the sea surface and is an oil transport hose used day and night. As shown in Fig. 1A, a reinforcing layer 1B made from organic fibers or metal fibers is layered on an inner surface rubber 1A and an outer surface rubber 1C made from an elastic body is further layered on the reinforcing layer 1B. Further, as shown in Fig. 1B, the oil transport hose formed into a long cylindrical shape (outer diameter of 800mm) has multiple tubes connected by flange portions and is set to float on the ocean offshore.

Further, as shown in Fig. 1A, in the outer surface 2 made from two-fluid soft urethane resin of a thickness of 1 to 10mm formed on the surface of the outer surface rubber 1C of the oil transport hose, light reflective materials 3, which are glass beads (manufactured by Union Co., Ltd., model UB-46MJ) of a diameter of 63 to 90µm having an aluminum vapor-deposited film (in the drawings, the portions that are filled in black), are stuck such that at least the hemispheres of the majority of the glass beads are completely buried into the outer surface 2. The two-fluid soft urethane resin is transparent. The diameter of the glass beads used in the present example varies within the aforementioned range because it is difficult to set all the diameters of glass beads equal. Note that, if the diameters of the glass beads are not equal, they do not adversely affect the reflective effect.

Here, the burying of the light reflective material 3 made from the glass beads was performed by: coating a hose having an exterior diameter of 800mm with a two-fluid soft urethane resin made from a urethane resin and a vulcanizer so that the coating has a thickness of 3 to 4mm, while rotating the hose around its central axis once every 10 seconds; and naturally dropping the glass beads with a sieve from a height of 10 to 100cm, in a state where a temperature of the resin is maintained in a range of 50 to 65°C.

Specifically, the two-fluid soft urethane resin was set in a state of starch syrup where the resin neither flows off nor is solid, the gross density of the slits of the machine (a sieve) that drops the glass beads was set to approximately 1.8mm, the supply rate of the glass beads was set to 10g/m²/sec, and the light reflective materials 3 as glass beads (manufactured by Union Co., Ltd., model UB-46MJ) were provided such that at least the hemispheres of the majority of the glass beads weree completely buried into the outer surface.

When light from vessels and the like passing by at night hits this oil transport hose, the light that passed through the transparent outer surface 2 and the sphere surfaces of the light reflective material 3 without the aluminum vapor-deposited film reaches up to the aluminum vapor-deposited film, resulting in that the light incident thereon is reflected by the entire outer surface 2, thereby making the existence of the hose known to vessels and the like passing by in the vicinity. The reflection intensity at the floating body 1 of the first embodiment was measured by using a reflectivity meter NS-1D manufactured by Suga Test Instruments Co., Ltd. The measured reflection intensity was 46 cd/lux/m², which proves that the floating body 1 has satisfactory reflective function.

Accordingly, with the floating body 1 of the first embodiment, due to the light reflective materials 3 as the glass beads having the aluminum vapor-deposited film provided thereon, that are buried in the outer surface 2 made from an elastic body, collision of the floating body 1 with vessels can be prevented without providing special illuminating devices at the exterior of the floating body 1. Further, as the light reflective materials 3 do not drop out from the outer surface 2 even by large shaking during rough weather or collision with floating objects and the like and the light reflective function can be ensured semi-permanently, maintenance of the floating body 1 is rendered unnecessary, which is economical.

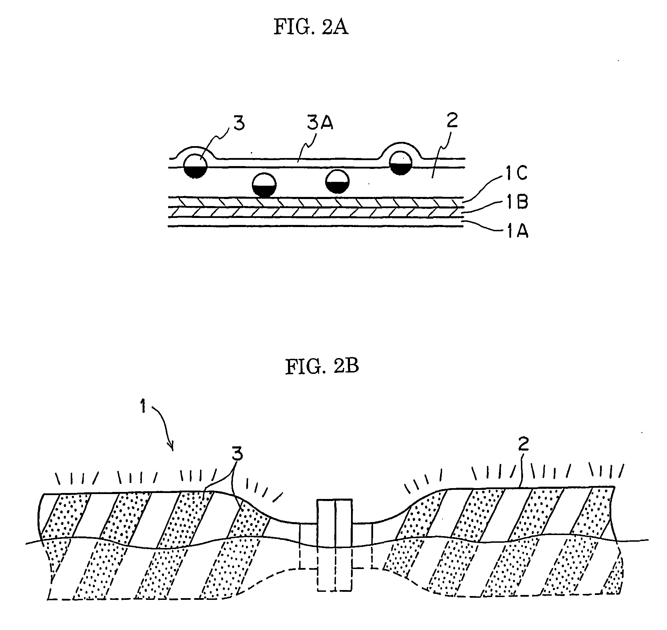

Fig. 2A and Fig. 2B are a partial cross-sectional view and a side view showing a second embodiment of the water surface floating body with light reflective material of the present invention. The floating body 1 of the second embodiment shown in Fig. A and Fig. 2B is an oil transport hose having a structure the same as the first embodiment. However, as shown in Fig. 2A, the light reflective material 3 of the glass beads (manufactured by Union Co., Ltd., model UB-46MJ) are covered at the surface by a resin material having light transparency (a transparent resin film) 3A. Further, as shown in Fig. 2B, the light reflective material 3 are buried in a spiral shape and not along the entire outer surface 2. In the case of this the second embodiment, the same effect as the first embodiment is exhibited. In the structure of the second embodiment, there is an advantage in that the amount of the light reflective material 3 that is used can be reduced. Further, there is another advantage in that the dropping of the glass beads can be prevented by the transparent resin film.

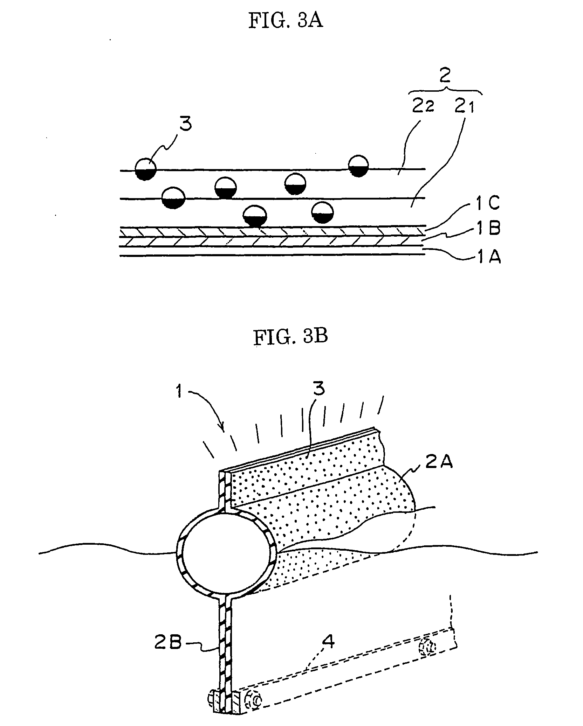

Fig. 3A is a partial cross-sectional view showing a third embodiment of the water surface floating body with light reflective material of the present invention, and Fig. 3B is a perspective view showing the third embodiment of the water surface floating body with light reflective material of the present invention. Fig. 4 is a perspective view showing a fourth embodiment. The floating body 1 of the third embodiment and the fourth embodiment is not an oil transport hose, but rather a floatable-immersible oil fence for preventing the flow of crude oil in a sea berth or the like. Specifically, the floatable-immersible oil fence has a hollow rubber float portion 2A, to which air is supplied during use so that the float portion 2A floats and functions as a fence portion. In use, the float portion 2A, along with a rubber skirt portion 2B submerged in the ocean, prevents oil in the vicinity of the sea surface from dispersing. The bottom end of the skirt portion 2B has a weight 4 attached thereto. When the floating body 1 of the third embodiment is used as a film for anti-pollution dispersing film, by further hanging a film made of canvas from the lower portion of the skirt portion 2B, pollution in the ocean can be prevented from dispersing.

Further, the floating body 1 of the third embodiment of Fig. 3A and Fig. 3B has two layers of two-fluid soft urethane resin in which the glass bead light reflective material 3 are buried, as shown in Fig. 3A. Specifically, the outer surface 2 has a multi-layered structure including an outer surface 2₁ and an outer surface 2₂. As shown in Fig. 3B, glass beads (manufactured by Union Co., Ltd., model UB-46MJ) as the light reflective material 3 are buried at the entire surface of the float portion 2A, of the outer surface of the floatable-immersible oil fence. Further, the floating body 1 of the fourth embodiment shown in Fig. 4 is a floatable-immersible oil fence having a float portion 2A in which the light reflective material 3 are buried as in the third embodiment but in a stripe configuration.

### Possible Industrial Applications

In the water surface floating body with light reflective material of the present invention, a light reflective material as glass beads having a metal vapor-deposited film provided thereon is attached on the outer surface of the floating body. When light emitted from vessels and the like passing nearby at night hits the floating body, the light is reflected at the outer surface of the floating body so that vessels and the like passing nearby are made aware of its presence. As the invention renders provision of specific external illumination device unnecessary and only requires provision of glass beads having a metal vapor-deposited film provided thereon as a light reflective material, the invention provides a water surface floating body excelling in durability, being free from the trouble of maintenance and being able to maintain its good reflective capability due to the metal vapor-deposited film for long periods of time.

## Claims

1. A water surface floating body that is floated on a surface of water even at night, comprising a light-reflective material including glass beads, the light-reflective material being provided at an outer surface of the water surface floating body, wherein the glass beads have a metal vapor-deposited film provided thereon.

2. The water surface floating body with light reflective material of claim 1, wherein at least the hemisphere portions of the light reflective material made from glass beads are buried into the outer surface made from an elastic body, of the floating body.

3. The water surface floating body with light reflective material of claim 1, wherein the outer surface of the floating body transmits light.

4. The water surface floating body with light reflective material of claim 1, wherein a surface of the light reflective material comprising glass beads is covered by a resin material that transmits light.

5. A manufacturing method for a water surface floating body that is floated on the surface of water even at night, comprising the steps of:
coating the water surface floating body with a liquefied resin, while rotating the floating body around its central axis, to form an outer surface of the water surface floating body;
dropping glass beads which are to function as a light-reflective material on the outer surface, in a state where the fluidity of the liquefied resin is maintained; and
hardening the liquefied resin and fixing the light reflective material to the outer surface.

6. The manufacturing method for a water surface floating body having light reflective material of claim 5, further comprising the steps of:
repeating by multiple times the application of the liquefied resin for forming the outer surface, followed by dropping of the glass beads as the light reflective material; and
thereby making the outer surface having the light reflective material provided thereon a multi-layered structure.

7. The manufacturing method for a water surface floating body having light reflective material of claim 5, further comprising burying the light reflective material into the outer surface by spraying the glass onto the outer surface.
